# EUROPEAN PATENT APPLICATION

(11) **EP 0 724 094 A2**
(43) Date of publication of application: **31.07.1996**
(21) Application number: 95830365.3
(22) Date of filing: 23.08.1995
(51) Int. Cl.: F16H 7/12

(54) **Tensioner, especially for flexible transmission parts**

(30) Priority: 07.09.1994 IT VR940077
(71) Applicant: Canova, Franco, I-37135 Verona (IT)
(72) Inventor: Canova, Franco, I-37135 Verona (IT)
(74) Representative: Lanzoni, Luciano

(57) **Abstract**

The present discovery deals with a tensioner designed especially for flexible transmission elements. It includes a fixed body (1) with a cavity (5) inside which a mobile prismatic element (2) can perform limited rotations, countered by the action of a set of flexible elements (4) placed between said prismatic element (2) and the inner walls of the cavity (5). This mobile prismatic element (2) is fitted with an arm (3) which may hold, for example, a profiled head at its free end to tension the flexible transmission element. In this tensioner the fixed body (1) has at least one threaded hole (10) to hold a screw (11) which may be used to pre-load the tensioner. In addition, the arm (3) may be attached to the prismatic element (2) by means of a screw (19) which may be inserted in a slot (12) on the arm (3). An electrical limit switch may also be included (14-15).

## Description

The present invention relates to a stretcher, especially for flexible transmission parts such as chains, geared belts, etc.

The stretcher in question includes a fixed body with a cavity inside which a mobile prismatic part can perform limited rotations, countered by the action of four flexible parts placed between the moving part and the inner walls (specifically the corners) of the cavity. This mobile prismatic element is fitted with an arm, the free end of which holds a profiled head to stretch the chain or geared belt.

Currently, in accordance with prior art, the stretcher does not require pre-loading on the bench. It is therefore quite inconvenient to mount, and often requires the work of at least two operators (one to attach the body of the stretcher and the other to hold the arm in traction), thus increasing installation costs. The absence of pre-loading does not allow the stretcher to be installed with the pre-set exerted force.

In known stretchers, radial adjustment is not included. The arm is welded to the prismatic element and thus cannot be positioned at the desired angle in relation to the prismatic element.

This constitutes a considerable operative limitation. Nor is it possible to adjust the arm lengthwise with respect to the prismatic element, which makes it impossible to vary the stretching force (which, in addition to the angle between the arm and the fixed body, also depends on its length) as well as the inclination of the arm. This disadvantage is essentially operative.

In addition, in known stretchers there is no use of electrical or mechanical limit switches to control the tension. Nor is it possible to adjust the position of the fixed body by sliding it along the support surface. This often makes it inconvenient to mount the stretcher in its ideal working position.

The essential purpose of the present discovery is thus to overcome all of the problems described above, relating to current stretchers of the type described above, to provide a stretcher for flexible transmission parts which may be easily pre-loaded and mounted in the ideal working position by a single operator, and which is easy and inexpensive to produce.

This purpose and others are all achieved by the stretcher in question, the main features of which are described in the claims that follow.

Additional features and advantages of the present discovery shall appear more evident from the detailed description below of some of the preferred forms of manufacture, illustrated for purely indicative purposes and not limited thereto, in the enclosed drawings, where:

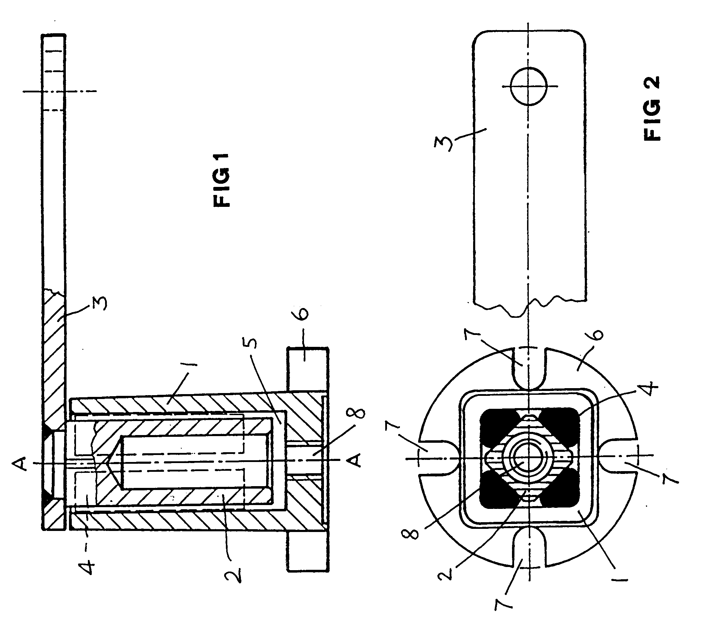

- figures 1 and 2 show the stretcher in question in its original form of manufacture, viewed in vertical and horizontal cross-section;
- figures 3 and 4 show two views of a second form of manufacture of the stretcher in question;
- figures 5 and 6 show two views of a third form of manufacture of the stretcher described in this discovery;
- figures 7 and 8 show two views of the stretcher in question fitted with one type of limit-switch;
- figures 9 and 10 show two views of the stretcher in question fitted with a second type of limit switch;
- figures 11 through 13 and 14 through 15 show the views of the discovery in question without and fitted with a profiled protrusion for coupling between the internal element and an external part, respectively;

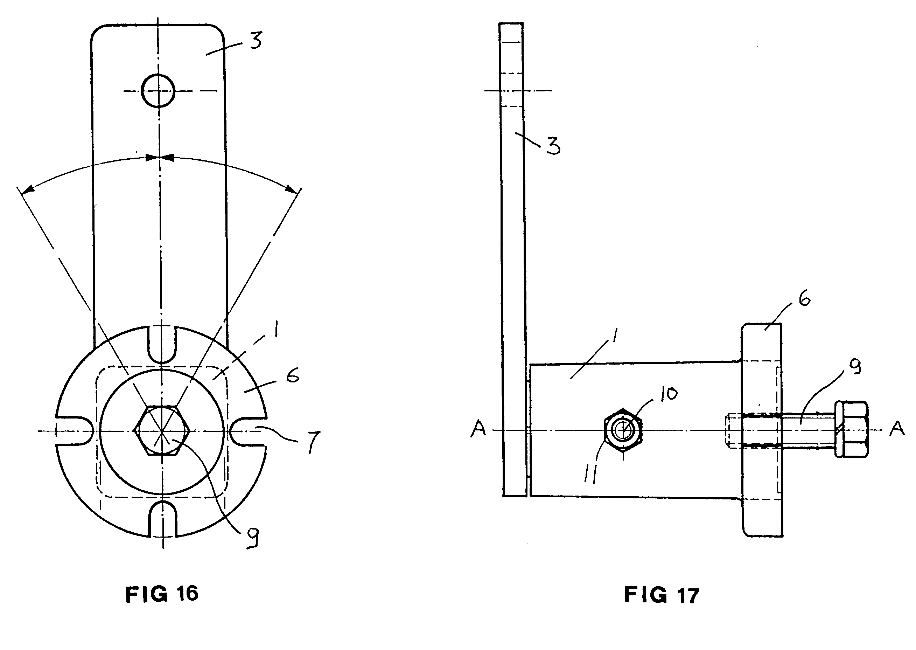

- figures 16 and 17 show two views of the stretcher in question;

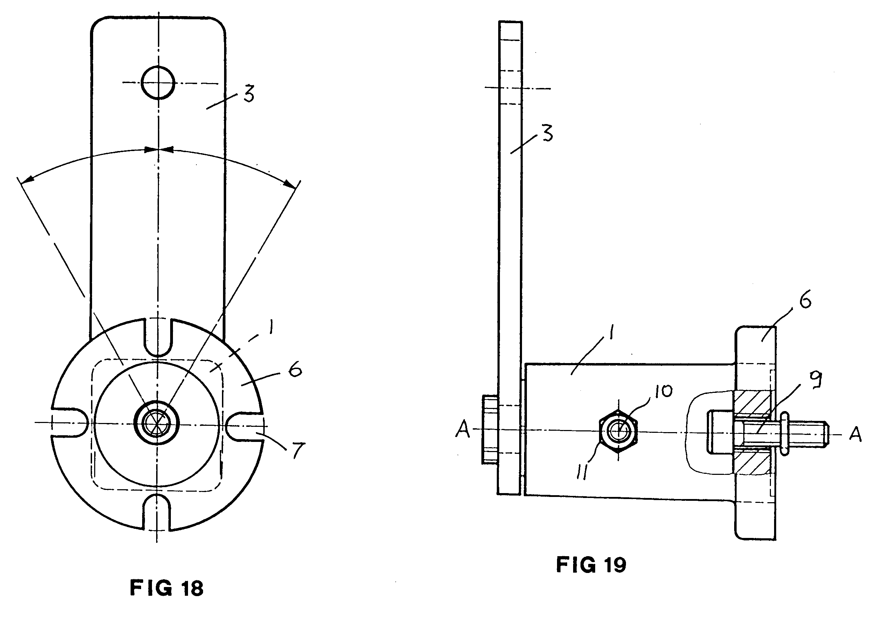

- figures 18 and 19 show the stretcher in figure 16 and 17, in a front assembly, according to two views;
- figures 20 and 21 show the stretcher in figure 16 and 17, fitted with a different system for connecting the mobile arm, according to two views;
- figures 22 and 23 show the stretcher in question fitted with a slotted arm, according to two views.

In reference to the enclosed drawings, we may note that the stretcher relating to this discovery essentially includes a fixed body 1, which houses a prismatic element 2, connected to an outer arm 3, and four flexible elements 4, in the form of rubber cylinders, placed at the internal corners of the fixed body 1.

The latter has a blind, quadrangular cavity 5 which mainly extends along the longitudinal axis A, and is fitted with a circular holding plate 6 with four notches 7.

Note that a single notch 7 would be sufficient for connection to an antirotation peg (not illustrated) . In this case, however, the greater number of notches 7 makes it possible: a) to increase the grip to the holding wall of the stretcher (since it increases friction in the contact between the plate 6 and the wall itself); b) to increase the specific pressure of the plate 6 to the holding wall (since the contact area of the plate 6 is smaller); c) to use more holding screws, placed in the notches 7 to connect the plate 6 to the wall.

The body 1, in the example shown in the attached drawings, is in a parallelopipedon shape with square bases and has a threaded hole 8, aligned with axis A, to hold a screw 9 to connect the stretcher to the wall where it is attached (not illustrated).

The arm 3 can hold a profiled head (not illustrated for the sake of simplicity) at its free end, to stretch the flexible transmission part (also not illustrated).

For this purpose the prismatic element 2 is capable of performing limited rotations around axis A, countered by the flexible action of the cylinders 4. Again in reference to the example illustrated in the enclosed drawings, element 2 is also in a parallelopipedon shape with square bases.

On the side, the fixed body 1 has a threaded through-hole 10, the axis of which is substantially perpendicular to axis A, to hold a screw 11, which may b used to pre-load the stretcher. The screw 11 acts on the mobile element 2 inside the body 1.

Pre-loading may be done at the bench by tightening the screw 11 after first partially rotating the arm 3. It is therefore easy and rapid to install on the machine, requiring a single operator. After the stretcher has been attached in the desired position, simply by loosening the screw 11 the arm 3 will be placed against the part to be stretched.

Pre-loading with the screw 11 makes it possible to install the stretcher with the preferred exerted force, either positive or negative.

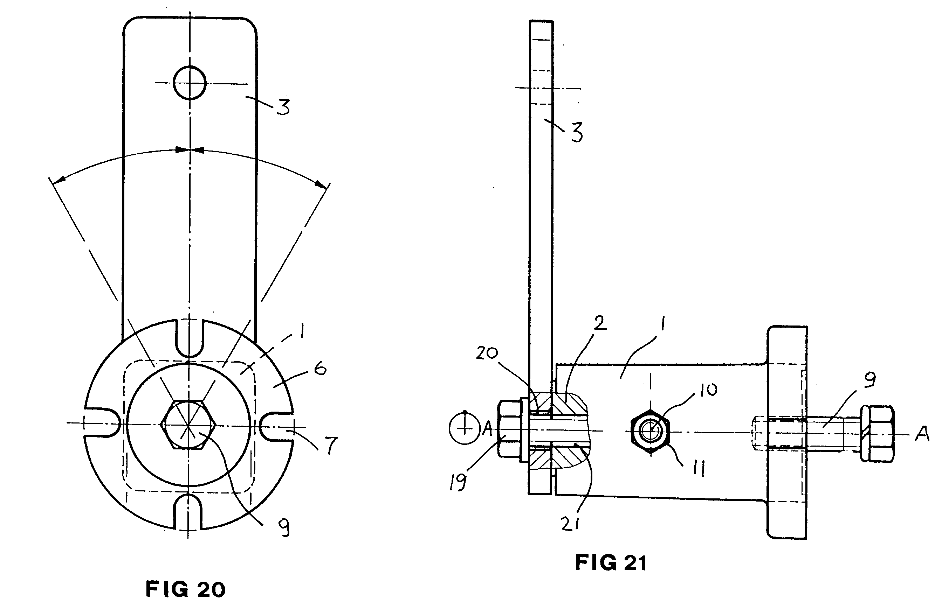

Note that the arm 3 may be advantageously attached to the element 2 not by welding (as in traditional stretchers), but by means of a screw 19. The latter is inserted in an initial hole 20 present on the arm 3, and a second threaded hole 21 present on the head of the prismatic element 2 (see fig. 21). By connecting with the screw 19, the arm 3 may be positioned in relation to the body 1 with a variable inclination between 0° and 360°. This is especially useful when the pre-loading system is provided. It is also useful for maintenance of the profiled head attached to the end of the arm 3, since the arm 3 itself need simply be detached from the stretcher by loosening the screw 19, rather than dismantling the entire stretcher as is necessary today.

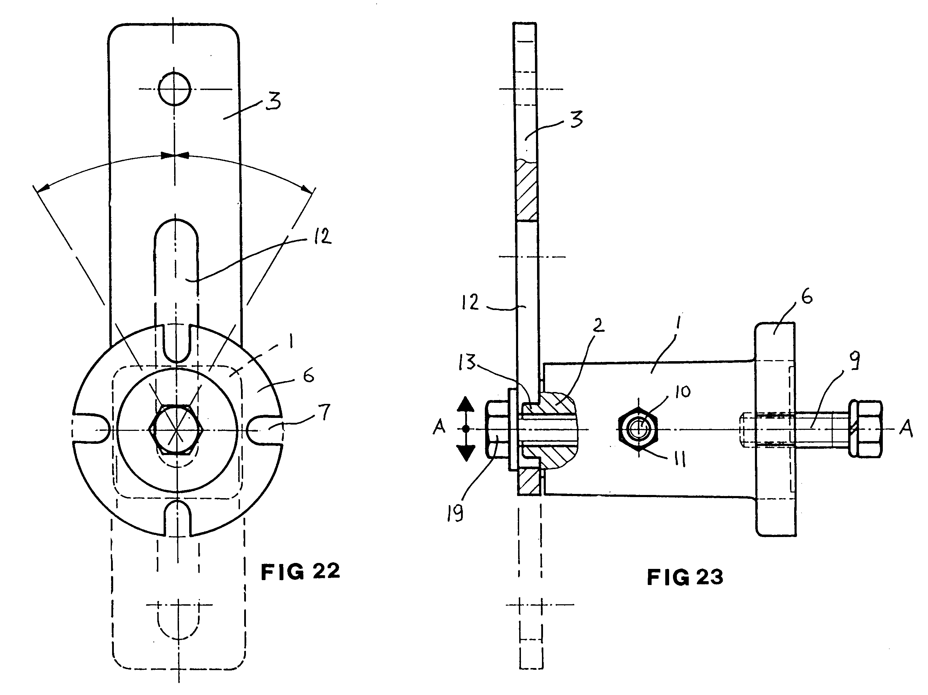

The arm 3 may also have a slot 12 (see figs. 22 and 23) rather than a circular hole. In this way, by placing the element 2 along the slot 12 appropriately, it is possible to change the stretching force as desired. If for example one wishes to increase the stretching force, it is sufficient to reduce the distance between the axis A and the free end of the arm 3. To do so, the operator need simply slide the arm 3 by the desired distance, using the slot 12.

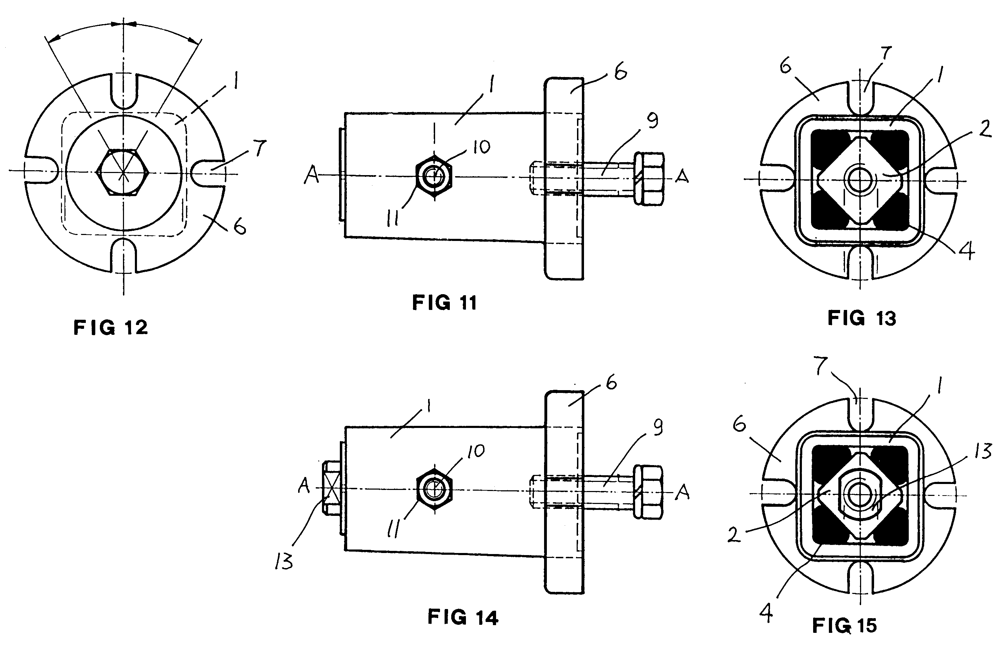

Note that the connection between the arm 3 and the element 2 inside the body 1 may be advantageously made by including a profiled axial protrusion 13 at the top of the element 2 (basically rectangular in shape with rounded smaller sides - see figs. 14 and 23), to be inserted in the slot 12 and slide along said slot.

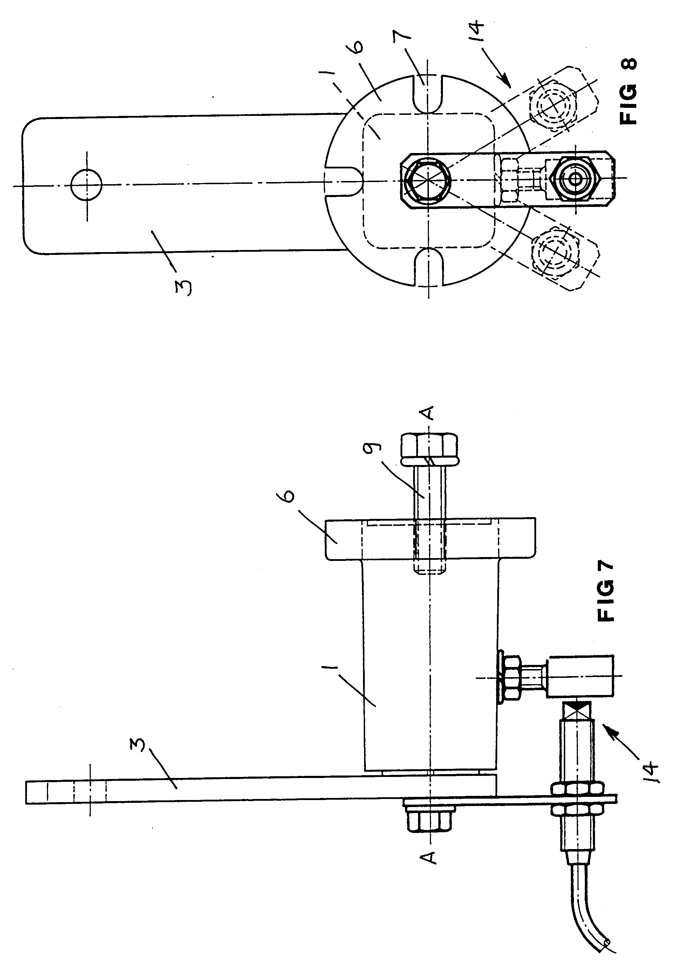

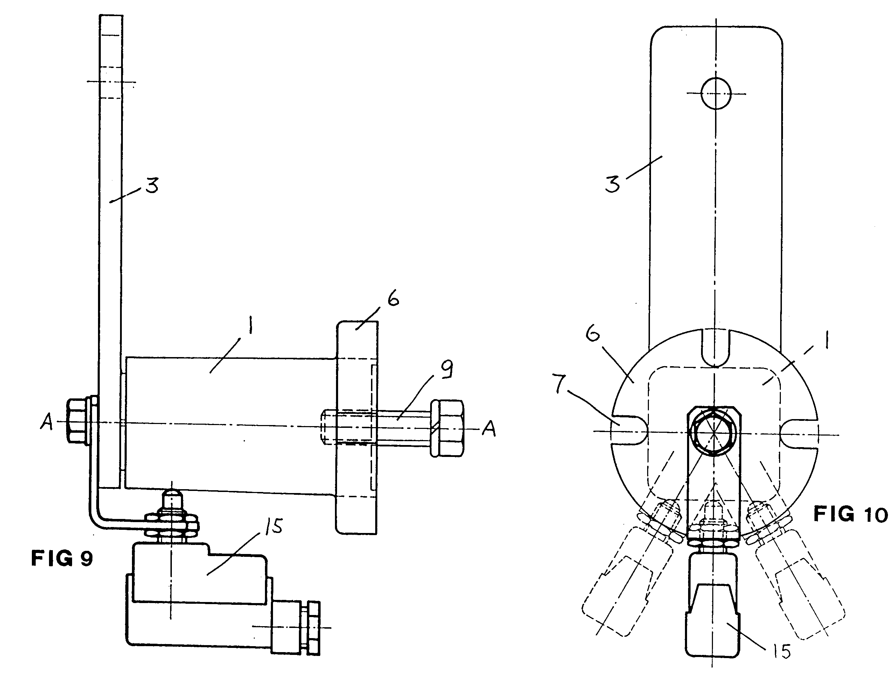

The stretcher in the present discovery may also be advantageously equipped with an electrical limit switch. Figures 7 and 8 show the first type of limit switch, with a proximity sensor, numbered 14. Figures 9 and 10 show a second type of limit switch, marked 15, operated by means of a push-button.

Finally, note that for the purpose of maximizing the position of the stretcher in relation to the part to be stretched, a slotted support base 16 may be advantageous.

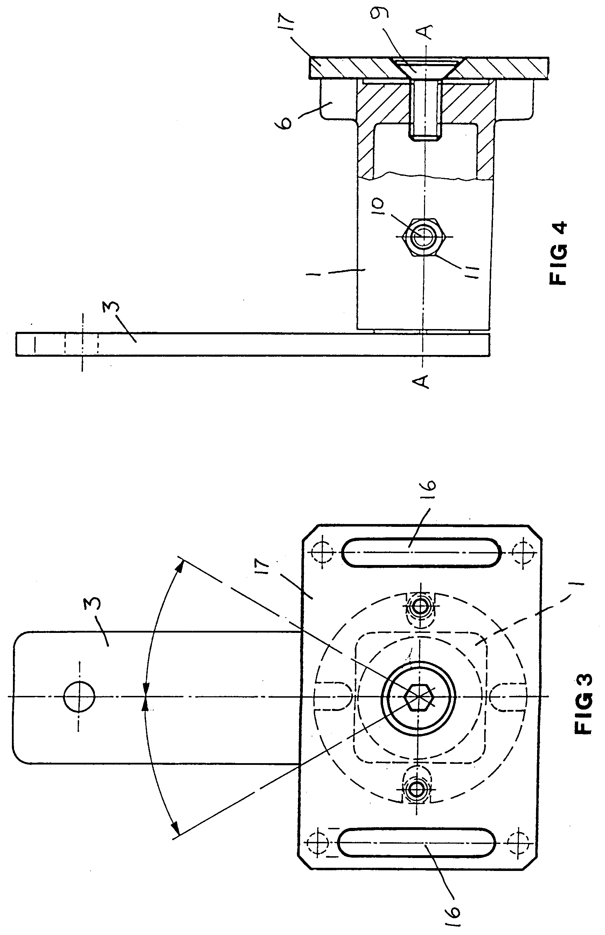

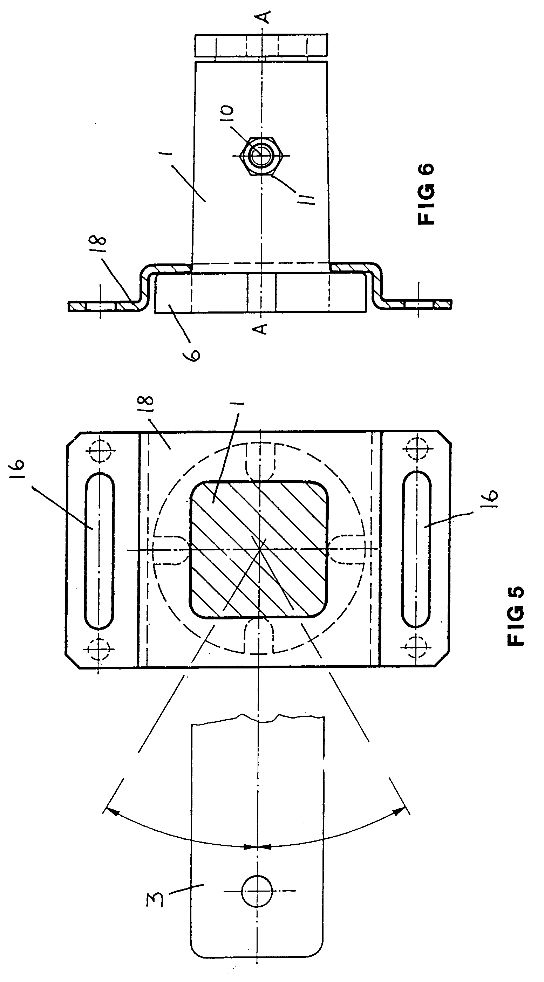

Figures 3 and 4 show one type of support base, marked 17, with a quadrangular plate profile. Figures 5 and 6 show a second type of support base, marked 18, made up of a folded quadrangular bracket.

## Claims

**1)** Stretcher, especially for flexible mechanical parts consisting of a fixed body (1) having a quadrangular cavity (5) extending primarily along a longitudinal axis (A), inside which a mobile prismatic element (2) can perform limited rotations around said longitudinal axis (A), countered by the action of a a set of flexible elements (4) placed between said prismatic element (2) and the inner walls of said cavity (5), since said mobile prismatic element (2) is fitted with an arm (3) which may, for example, carry a profiled head at its free end to work on said flexible transmission part to stretch it. Said stretcher is characterized by the fact that said fixed body (1) has at least one threaded through hole (10), the axis of which is essentially perpendicular to said longitudinal axis (A), to hold a screw (11) by means of which the stretcher may be pre-loaded, as said screw (11) adjusts said mobile prismatic element (2) inside said fixed body (1).

**2)** Stretcher according to claim 1, characterized by the fact that said arm (3) is attached to said mobile prismatic element (2) by means of removable parts (19).

**3)** Stretcher according to claim 2, characterized by the fact that said removable parts consist of at least one screw (19) inserted into a first hole (20) on said arm (3) and a second threaded hole (21) on said prismatic element (2).

**4)** Stretcher according to claim 3, characterized by the fact that said first hole consists of a slot (12) extending primarily along the length of said arm (3).

**5)** Stretcher according to claim 4, characterized by the fact that said prismatic element (2) is equipped with a profiled axial protrusion (13) near said slot (12) to be inserted into said slot (12) and slide along it in the direction of said length of said arm (3).

**6)** Stretcher according to claim 1 or later, characterized by the fact of being fitted with a limit switch device (14-15).

**7)** Stretcher according to claim 6, characterized by the fact that said limit switch consists of an electrical limit switch with proximity sensor (14).

**8)** Stretcher according to claim 6, characterized by the fact that said limit switch consists of an electrical limit switch with push-button operation (15).

**9)** Stretcher according to claim 1 or later, characterized by the fact that said fixed body (1) is fitted with a support base (17) with slots (16).
